# EUROPÄISCHE PATENTSCHRIFT

(11) **EP 1 566 256 B1**
(45) Veröffentlichungstag und Bekanntmachung des Hinweises auf die Patenterteilung: **12.07.2006**
(21) Anmeldenummer: 05001440.6
(22) Anmeldetag: 25.01.2005
(51) Int. Cl.: B29C 47/08, B08B 7/00

(54) **Verfahren und Vorrichtung zur Reinigung eines Blaskopfes für Kunststofffolien**
Method and apparatus for cleaning a blowing head for plastic films
Procédé et appareil pour nettoyer une tête de soufflage pour films en matière plastique

(30) Priorität: 18.02.2004 DE 102004007929
(43) Veröffentlichungstag der Anmeldung: 24.08.2005
(73) Patentinhaber: Kiefel Extrusion GmbH, 67547 Worms (DE)
(72) Erfinder: Gandelheidt, Edgar, 67551 Worms (DE)
(74) Vertreter: Zmyj, Erwin

(56) Entgegenhaltungen:
- US-A- 4 233 496
- US-A- 5 485 858
- PATENT ABSTRACTS OF JAPAN Bd. 007, Nr. 268 (C-197), 30. November 1983 (1983-11-30) & JP 58 149919 A (TORAY KK), 6. September 1983 (1983-09-06)
- FOURNE F: "REINIGEN KUNSTSTOFFVERSCHMUTZTER MASCHINENTEILE UND WERKZEUGE" KUNSTSTOFFE, HANSER, MUNCHEN, DE, Bd. 79, Nr. 9, 1. September 1989 (1989-09-01), Seiten 807-813, XP000175039 ISSN: 0023-5563

## Beschreibung

Die Erfindung bezieht sich auf ein Verfahren zur Reinigung eines Blaskopfes für Kunststofffolien, der während der Herstellung von Folien durch eine Heizung auf Betriebstemperatur gehalten wird. Die Erfindung bezieht sich auch auf eine Vorrichtung zur Durchführung des Verfahrens.

Blasköpfe werden eingesetzt, um aus einem runden Schmelzestrang, wie er aus einem Extruder austritt, eine Ringdüse anzuspeisen. Die Blasköpfe werden in Ausführungen für eine Schmelzeschicht als Monoblasköpfe und für mehrere Schichten als Coextrusionsblasköpfe eingesetzt. Die Blasköpfe müssen nach bestimmten Produktionsintervallen gereinigt werden. Bei der Reinigung muss der Kunststoff vollständig aus dem Blaskopf entfernt werden. Es sind bereits Verfahren zur Reinigung von polymerbehaftete Teile bekannt. Eines der bekannten Verfahren beruht auf einer Wirbelbettreinigung. Das zu reinigende Bauteil wird in ein Bett aus Quarzsand gehängt. Der Quarzsand liegt auf einem Düsenboden, durch den ein Brenngas-Luft-Gemisch geblasen wird. Das durchströmende, brennende Gas führt dazu, dass der Sand turbulente Bewegungen ausführt. Der Reinigungseffekt ergibt sich aus der hohen Temperatur des Sandes und der abrasiven Wirkung der Strömung des Sandes.

Das Dokument US-A-5 485 858 beschreibt ein Verfahren zum Reinigen von Teilen von Kunststoffverarbeitungsmaschinen, u.a. Blasköpfen, an denen Kunststoffreste anhaften, durch Einbringen der Teile in ein über die Schmelz- oder Zersetzungstemperatur der Kunststoffteile erhitztes Wärmeträgermedium.

Bei einem weiteren bekannten Verfahren wird die Reinigung in einer Unterdruckkammer unter Ausschluss von Sauerstoff durchgeführt. Der Blaskopf wird über Strahlungsheizungen erhitzt. Ein Teil der Kunststoffschmelze fließt aus dem Blaskopf aus. Nachfolgend wird die Temperatur weiter erhöht. Die verbleibende Schmelze zersetzt sich durch ein Cracken der Makromoleküle in die Monomere z. B. CH₄, C₂H₆, CO, CO₄, H₂. Die dabei entstehenden Gase werden über einen Katalysator abgeführt und zu CO₂ und H₂O umgewandelt. Gegenüber dem Wirbelbettverfahren ist auch die Reinigung der inneren Bereiche des Blaskopfes möglich.

Nachteilig bei den o.g. Verfahren ist die Tatsache, dass der Blaskopf vor der Reinigung völlig demontiert werden muss. Bei dem Wirbelbettverfahren können nur die Bereiche des Bauteiles gereinigt werden, die vom Reinigungssand erreicht werden.

Bei dem zweiten bekannte Verfahren besteht der Nachteil, dass der Blaskopf nur über Strahlungsheizungen erhitzt wird. Durch das im Vergleich zum freien Volumen im Blaskopf große Volumen im Reinigungsofen wird eine Verringerung des Sauerstoffanteiles in der umgebenden Luft erheblich erschwert. Bei der Demontage des Blaskopfes aus der Extrusionsanlage müssen auch sämtliche Zusatzkomponenten wie Temperatursensoren und Heizungsbänder entfernt werden. Der Investitionsaufwand für solche Vakuumreinigungsanlagen ist sehr hoch.

Aufgabe der Erfindung ist es, eine Reinigung eines Blaskopfes für Kunststofffolien so auszugestalten, dass sämtliche Bereiche, die mit Kunststoff bei der Herstellung von Folien in Berührung kommen, gereinigt werden können und der Aufwand wesentlich beschränkt wird.

Diese Aufgabe wird bei einem Verfahren der eingangs erläuterten Art erfindungsgemäß dadurch gelöst, dass zunächst in einer ersten Phase der Blaskopf nach Beendigung des Herstellungsvorganges durch die vorhandene Heizung auf eine oberhalb der Schmelztemperatur des im Blaskopf verbliebenen Kunststoffes zur Verflüssigung desselben erhitzt wird, dass spätestens nachdem Ablaufen des verflüssigten Kunststoffes zumindest der mit Kunststoff in Berührung stehende Bereich des Blaskopfes in einer zweiten Phase von der Umgebungsatmosphäre abgeschlossen und von seiner sauerstoffhaltigen Atmosphäre befreit und weit über die Zersetzungstemperatur des noch verbliebenen Kunststoffes erhitzt wird und die dabei anfallenden gasförmigen Produkte abgeführt werden und dass am Ende der Zersetzungsphase des verbliebenen Kunststoffes der Blaskopf mit einem Gas durchspült wird, das zumindest einen Anteil an Sauerstoff enthält, um eine Veraschung von Restpartikeln durchzuführen.

Diese Verfahrensart bringt mehrere Vorteile mit sich. Da die am Blaskopf für die Herstellung der Folien erforderliche Heizung für den Reinigungsvorgang benutzt wird, ist eine zusätzliche Investition, beispielsweise für Strahlungsheizungen und für eine Vakuumkammer, nicht mehr erforderlich. Weiterhin kann die Restwärme des Blaskopfes genutzt werden, da sich die Reinigungsphase unmittelbar an die Produktion anschließen kann.

In weiterer Ausgestaltung der Erfindung ist vorgesehen, dass zum Abschließen des mit Kunststoffen in Berührung stehenden Bereiches des Blaskopfes von der Atmosphäre, die Ein- und Austrittsöffnungen für die Kunststoffschmelze mit Verschlussstücken verschlossen werden, die Anschlüsse für die Zuführung von Inertgas und eines sauerstoffhaltigen Gases sowie Anschlüsse für die Abfuhr der Schmelze für die Abführung von anfallenden Abgasen und für die Evakuierung dieses Bereiches aufweisen.

Wenn in Weiterbildung der Erfindung für die Reinigung des Blaskopfes dieser in der Extrusionsanlage verbleibt, so ist hierdurch ein erheblicher Demontageaufwand vermieden worden, der notwendig ist, um die zu reinigenden Teile entweder in ein Wirbelbett oder in eine Vakuumkammer zu verbringen, wobei bei dieser Demontage auch die Zuführungsleitungen für Temperaturfühler und die Heizung entfernt und wieder angebracht werden müssen. Das Verbleiben des Blaskopfes in der Extrusionsanlage verringert die Montagezeit und den Aufwand für zusätzliche Anlagen, wie z. B. Unterdruckkammern, derart, dass die notwendigen Investitionskosten bereits für eine Anlage wirtschaftlich vertretbar sind.

In Weiterbildung der Erfindung kann zur Erzielung einer sauerstofffreien Atmosphäre im Blaskopf dieser mit einem inerten Gas durchspült werden. Weiterhin ist es möglich, zur Erzielung einer sauerstofffreien Atmosphäre im Blaskopf diesen zu evakuieren.

Es kann vorteilhaft sein, den Spülvorgang mit Inertgas bereits mit Beginn des Reinigungsvorganges nach Anspruch 1 durchzuführen.

Das sauerstoffhaltige Spülgas kann in vorteilhafter Weise Umgebungsluft, mit Sauerstoff angereicherte Umgebungsluft oder reiner Sauerstoff sein.

Eine Vorrichtung zur Durchführung des Verfahrens ist dadurch gekennzeichnet, dass der Blaskopf mit einem unteren Verschlussstück ausgeführt ist, das wahlweise eine Schmelzezuführung, eine Schmelzeabführung und eine Gasabführung gestattet. In diesem Falle ist es nicht notwendig, den Blaskopf von der Schmelzezuführung zu lösen, um dieses Verschlussstück anzubringen, was den Montageaufwand bei jeder Reinigung vermindert.

Es ist aber auch möglich, dass der Blaskopf lösbar mit der Schmelzezuführung verbunden und von dieser zur Einführung eines Verschlussstückes mit Einrichtungen zum Anheben ausgebildet ist. Der Montageaufwand beschränkt sich dabei auf das Lösen des Blaskopfes von der Schmelzezuführung und das Anheben desselben, um ein Verschlussstück mit den entsprechenden Anschlüssen für die Schmelzeabführung oder die Abführung des anfallenden Abgases anzubringen.

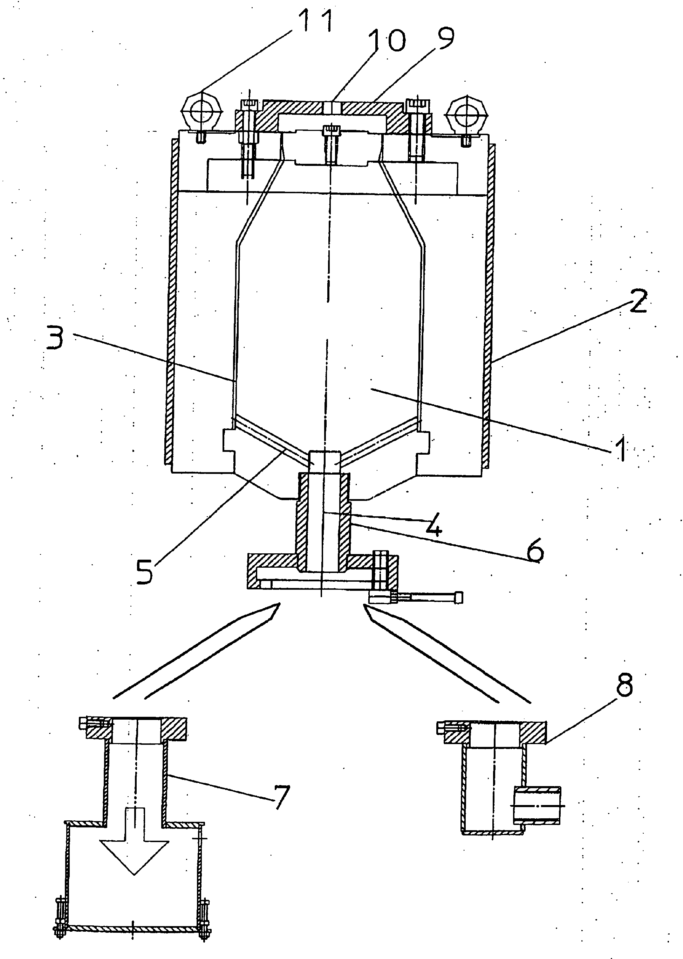

Die Erfindung wird nachfolgend anhand eines Ausführungsbeispieles näher erläutert, das in der Zeichnung anhand einer einzelnen Figur dargestellt ist. Diese zeigt einen Schnitt durch einen Blaskopf mit den für die Reinigung notwendigen Verschlussstücken.

Wie aus der Zeichnung ersichtlich, weist ein insgesamt mit 1 bezeichneter Blaskopf Heizbänder 2 auf, die ein Aufheizen des Blaskopfes bis zur Zersetzungstemperatur des in diesem nach der Produktion verbleibenden Kunststoffes gestattet. Mit 3 ist die Schmelzeschicht bezeichnet, die durch eine untere Öffnung 4 über die mit 5 bezeichneten Kanäle einführbar ist. Mit 6 ist ein unteres Verschlussstück bezeichnet, an welches wahlweise ein Auffangbehälter 7 für Schmelze oder ein Anschluss 8 für die Abführung des anfallenden Abgases ankuppelbar ist. Mit 9 ist ein oberes Verschlussstück bezeichnet, welches einen Anschluss 10 für die Zuführung von einem inerten Gas, beispielsweise Stickstoff, aufweist. Mit dem Bezugszeichen 11 sind Ringschrauben bezeichnet, die ein Anheben des Blaskopfes zur Einführung des Anschlussstückes 6 ermöglichen. Der Blaskopf kann auch mit einem Gabelstapler, der an seiner Unterseite angreift, angehoben werden.

## Patentansprüche

1. Verfahren zur Reinigung eines Blaskopfes (1) für Kunststofffolien, der während der Herstellung der Folien durch eine Heizung auf Betriebstemperatur gehalten wird, **dadurch gekennzeichnet, dass** zunächst in einer ersten Phase der Blaskopf (1) nach Beendigung des Herstellungsvorganges durch die vorhandene Heizung auf eine oberhalb der Schmelztemperatur des im Blaskopf (1) verbliebenen Kunststoffes zur Verflüssigung desselben erhitzt wird, dass spätestens nach dem Ablaufen des verflüssigten Kunststoffes zumindest der mit Kunststoff in Berührung stehende Bereich des Blaskopfes (1) in einer zweiten Phase von der Umgebungsatmosphäre abgeschlossen und von seiner sauerstoffhaltigen Atmosphäre befreit und weit über die Zersetzungstemperatur des noch verbliebenen Kunststoffes erhitzt wird und die dabei anfallenden gasförmigen Produkte abgeführt werden und dass am Ende der Zersetzungsphase des verbliebenen Kunststoffes der Blaskopf (1) mit einem Gas durchspült wird, das zumindest einen Anteil an Sauerstoff enthält, um eine Veraschung von Restpartikeln durchzuführen.

2. Verfahren nach Anspruch 1, **dadurch gekennzeichnet, dass** zum Abschließen des mit Kunststoff in Berührung stehenden Bereiches des Blaskopfes (1) von der Atmosphäre die Ein- und Austrittsöffnungen für die Kunststoffschmelze mit Verschlussstücken verschlossen werden, die Anschlüsse für die Zuführung von Inertgas und eines sauerstoffhaltigen Gases sowie Anschlüsse für die Abfuhr der Schmelze, für die Abführung von anfallenden Abgasen und für die Evakuierung dieses Bereiches, aufweisen.

3. Verfahren nach Anspruch 1 oder 2, **dadurch gekennzeichnet, dass** für die Reinigung des Blaskopfes (1) dieser in der Extrusionsanlage verbleibt.

4. Verfahren nach einem der Ansprüche 1 bis 3, **dadurch gekennzeichnet, dass** zur Erzielung einer sauerstofffreien Atmosphäre im Blaskopf (1) dieser mit einem inerten Gas durchspült wird.

5. Verfahren nach einem der Ansprüche 1 bis 3, **dadurch gekennzeichnet, dass** zur Erzielung einer sauerstofffreien Atmosphäre im Blaskopf (1) dieser evakuiert wird.

6. Verfahren nach Anspruch 4, **dadurch gekennzeichnet, dass** der Spülvorgang mit Inertgas bereits mit Beginn des Reinigungsvorganges nach Anspruch 1 durchgeführt wird.

7. Verfahren nach einem der Ansprüche 1 bis 6, **dadurch gekennzeichnet, dass** das sauerstoffhaltige Spülgas Umgebungsluft, mit Sauerstoff angereicherte Umgebungsluft oder reiner Sauerstoff ist.

8. Vorrichtung zur Durchführung des Verfahrens nach einem der Ansprüche 1 bis 7, **dadurch gekennzeichnet, dass** der Blaskopf (1) mit einem unteren Verschlussstück (6) ausgeführt ist, das wahlweise eine Schmelzezuführung, eine Schmelzeabführung und eine Gasabführung gestattet.

9. Vorrichtung zur Durchführung des Verfahrens nach einem der Ansprüche 1 bis 7, **dadurch gekennzeichnet, dass** der Blaskopf (1) lösbar mit der Schmelzezuführung verbunden und von dieser zur Einführung eines Verschlussstückes (6) mit Einrichtungen (11) zum Anheben ausgebildet ist.

## Claims

1. A method for cleaning a blowing head for plastic films which is kept at operating temperature by a heater during the production of films, wherein initially, in a first phase, after completion of the production process, the blowing head is heated by the heater that is present to a temperature above the melting temperature of the plastic remaining in the blowing head to liquefy the same, wherein, in a second phase, at the latest after the liquefied plastic has run out, at least the region of the blowing head that is in contact with the plastic is sealed off from the ambient atmosphere and purged of its oxygen -containing atmosphere and is heated far above the decomposition temperature of the plastic still remaining, and the gaseous products thereby occurring are discharged, and wherein, at the end of the decomposition phase of the remaining plastic, the blowing he ad is flushed through with a gas which contains at least a proportion of oxygen, in order to carry out an incineration of residual particles.

2. The method as claimed in claim 1, wherein, to seal off the region of the blowing head that is in contact with plastic from the atmosphere, the inlet and outlet openings for the polymer melt are closed with plugs which have connections for the supply of inert gas and an oxygen -containing gas and also connections for the removal of the melt, for the discharge of wa ste gases occurring and for the evacuation of this region.

3. The method as claimed in claim 1 or 2, wherein, for the cleaning of the blowing head, it remains in the extrusion installation.

4. The method as claimed in one of claims 1 to 3, wherein, to a chieve an oxygen -free atmosphere in the blowing head, it is flushed through with an inert gas.

5. The method as claimed in one of claims 1 to 3, wherein, to achieve an oxygen -free atmosphere in the blowing head, it is evacuated.

6. The method as claimed in claim 4, wherein the operation of flushing with inert gas is already carried out at the beginning of the cleaning operation as claimed in claim 1.

7. The method as claimed in one of claims 1 to 6, wherein the oxygen -containing flushing gas is ambient air, ambient air enriched with oxygen or pure oxygen.

8. A device for carrying out the method as claimed in one of claims 1 to 7, wherein the blowing head (1) is designed with a lower plug (6), which optionally allows melt to be supplied, melt to be discharged and gas to be discharged.

9. A device for carrying out the method as claimed in one of claims 1 to 7, wherein the blowing head (1) is detachably connected to the melt supply and is formed with devices (11) for raising it from the latter to introduce a plug (6).

## Revendications

1. Procédé de nettoyage d'une tête de soufflage (1) pour films en matière plastique, qui est maintenue à la température de service par un chauffage pendant la fabrication des films, **caractérisé en ce que** d'abord, dans une première phase, la tête de soufflage (1) est chauffée, une fois l'opération de fabrication terminée, par le chauffage présent à une température au-dessus de la température de fusion de la matière plastique restant dans la tête de soufflage (1) en vue de la fluidifier, **en ce qu'**ensuite après que la matière plastique liquéfiée s'est écoulée, au moins la région de la tête de soufflage (1) en contact avec la matière plastique, dans une deuxième phase, est coupée de l'atmosphère contenant de l'oxygène, et est débarrassée de son atmosphère contenant de l'oxygène et est chauffée bien au-dessus de la température de destruction de la matière plastique encore présente, et les produits gazeux ainsi formés sont évacués, et **en ce qu'**à la fin de la phase de destruction de la matière plastique restante, la tête de soufflage (1) est rincée avec un gaz qui contient au moins une proportion d'oxygène afin de provoquer une incinération des particules résiduelles.

2. Procédé selon la revendication 1, **caractérisé en ce que** pour la coupure de la région de la tête de soufflage (1) en contact avec la matière plastique vis-à-vis de l'atmosphère, les ouvertures d'entrée et de sortie pour la matière plastique en fusion sont fermées avec des pièces de fermeture, qui présentent des raccords pour l'alimentation en gaz inerte et en un gaz contenant de l'oxygène ainsi que des raccords pour l'évacuation de la matière en fusion, pour l'évacuation des gaz d'échappement formés et pour mettre sous vide cette région.

3. Procédé selon la revendication 1 ou 2, **caractérisé en ce que** pour le nettoyage de la tête de soufflage (1), celle-ci reste dans l'installation d'extrusion.

4. Procédé selon l'une quelconque des revendications 1 à 3, **caractérisé en ce que** pour l'obtention d'une atmosphère exempte d'oxygène dans la tête de soufflage (1), celle-ci est rincée avec un gaz inerte.

5. Procédé selon l'une quelconque des revendications 1 à 3, **caractérisé en ce que** pour l'obtention d'une atmosphère exempte d'oxygène dans la tête de soufflage (1), celle-ci est mise sous vide.

6. Procédé selon la revendication 4, **caractérisé en ce que** l'opération de rinçage avec un gaz inerte est déjà effectuée au début de l'opération de nettoyage selon la revendication 1.

7. Procédé selon l'une quelconque des revendications 1 à 6, **caractérisé en ce que** le gaz de rinçage contenant de l'oxygène est de l'air environnant, de l'air environnant enrichi d'oxygène ou de l'oxygène pur.

8. Dispositif pour la mise en oeuvre du procédé selon l'une quelconque des revendications 1 à 7, **caractérisé en ce que** la tête de soufflage (1) est réalisée avec une pièce de fermeture inférieure (6) qui permet de manière sélective une alimentation en matière en fusion, une évacuation de la matière en fusion et une évacuation de gaz.

9. Dispositif pour la mise en oeuvre du procédé selon l'une quelconque des revendications 1 à 7, **caractérisé en ce que** la tête de soufflage (1) est connectée de manière détachable à l'alimentation en matière en fusion et est réalisée avec des dispositifs (11) de levage de celle-ci pour l'introduction d'une pièce de fermeture (6).
